# EUROPEAN PATENT SPECIFICATION

(11) **EP 2 719 833 B1**
(45) Date of publication and mention of the grant of the patent: **05.08.2015**
(21) Application number: 12188579.2
(22) Date of filing: 15.10.2012
(51) Int. Cl.: E02D 27/52

(54) **A Hydroelectric Turbine System**
Hydroelektrisches Turbinensystem
Système de turbine hydroélectrique

(43) Date of publication of application: 16.04.2014
(73) Proprietor: Openhydro IP Limited, Dublin 2 (IE)
(72) Inventor: Ives, James, Dublin, Dublin 2 (IE)
(74) Representative: O'Neill, Brian

(56) References cited:
- BE-A3- 1 018 989

## Description

### Field of the invention

This invention relates to a hydroelectric turbine system to be secured at a deployment site, for example on the seabed and in an area of significant tidal flow, which system enables the turbine to be located securely without risk of overturning, in particular during extreme weather/tidal events, but without requiring the use of piling or other complex fixing operations, thus significantly simplifying the installation of such a turbine system.

### Background of the invention

The installation of base mounted hydroelectric tidal turbines has conventionally taken the form of the sinking of a pile into the seabed, on which pile a turbine or secondary frame carrying one or more turbines can then be located. However, the sinking of a pile into the seabed in an area of high tidal flow is considerably problematic and generally a dangerous operation. In addition, significant drilling and piling equipment must be transported to and operated at the site of installation, significantly increasing the complexity and cost of the operation. Working at sea with such large and heavy equipment is a dangerous and time consuming operation, and anything that can be done to simplify this task and/or decrease the time taken is of great benefit.

An alternative system and method for locating hydroelectric turbines on the seabed or other underwater support surface has therefore been developed in recent years, which employs a "gravity base" on which a turbine in mounted, the gravity base utilising the combined weight of the base and turbine, pressing downwardly into the seabed via a plurality of legs, in order to maintain the position and stability of the turbine system without requiring piling or other complex fixing mechanisms see for example document BE-A1-1018989. However, in order to provide sufficient stability the weight of the base and turbine must be significant, and must be designed to withstand extreme tidal events which however generally occur very infrequently. As a result the system, in particular the base, is essentially over engineered for normal operating conditions. Thus the turbine and associated base are large and cumbersome components, and require significant heavy lifting and transport equipment in order to achieve deployment and retrieval for maintenance purposes. The use of such heavy lifting equipment is normally a hazardous undertaking, and is rendered even more dangerous when this equipment is operated at sea under difficult and unsteady conditions.

It is therefore an object of the present invention to provide hydroelectric turbine system that overcomes the above-mentioned problems.

### Summary of the invention

According to the present invention there is provided a hydroelectric turbine system comprising a base comprising a frame, a plurality of legs extending from the frame; and at least one load bearing member extending from the base at a position adapted to resist, in use, overturning of the base.

Preferably, the base defines an overturning axis extending between a pair of the legs, the at least one load bearing member being positioned to resist an overturning moment acting about the overturning axis.

Preferably, the load bearing member is arranged and dimensioned to be at an elevated position above a surface of a deployment site when the plurality of legs are engaged against and supported by the surface.

Preferably, the load bearing member has a load bearing face positioned outboard of the overturning axis.

Preferably, the load bearing member comprises a leg secured to the base, and a load bearing face located at a free end of the leg.

Preferably, the load bearing face is oriented such as to be substantially parallel to a seabed or other support surface on contacting the seabed or support surface during an overturning event.

Preferably, the frame is substantially triangular and the base comprises three legs, one at or adjacent each apex of the triangular frame.

Preferably, the system comprises a load bearing member extending from each of three sides of the triangular frame.

Preferably, the system comprises a plurality of the load bearing members extending from one side of the triangular frame.

Preferably, the system comprises a hydroelectric turbine mounted on the base.

Preferably, the turbine comprises an open centre turbine.

### Brief description of the drawings

Figure 1 illustrates a perspective view of a hydroelectric turbine system according to an embodiment of the present invention;
Figure 2 illustrates an alternative mounting position for a load-bearing member forming part of the hydroelectric turbine system of the present invention; and
Figure 3 illustrates a side elevation of the arrangement illustrated in Figure 2, when the hydroelectric turbine system is located on the seabed.

### Detailed description of the drawings

Referring now to the accompanying drawings, there is illustrated a hydroelectric turbine system, generally indicated as 10, for location on the seabed or other suitable underwater support surface in order to extract energy from the flow of water, preferably the tidal flow of water, past the system 10, as is known in the art.

The system 10 comprises a base 12 for location on the seabed or other underwater support surface, the system 10 further preferably comprising a hydroelectric turbine 14 mountable, preferably releasably, to the base 12 by any suitable means. Thus, the base 12 acts as a support in order to secure the turbine 14 in an upright position such that the tidal flow of water passes through the turbine 14 in order to generate electricity, again in known fashion.

In the embodiment illustrated, the base 12 comprises a triangular frame supported on three legs 18 which each form an apex of the triangular frame 16. The frame 16 is comprised of three cross members 20, each extending between a pair of the legs 18. Each leg 18 additionally preferably comprises a pointed foot 22 extending downwardly from an underside of the respective leg 18. In use this foot 22 contacts and preferably pierces the seabed or other underwater support surface, in order to secure the system 10 in position and prevent it from sliding along the seabed under the influence of tidal forces acting thereon. The frame 16 and legs 18 may be formed from any suitable material, and for example may be formed from tubular steel of a gauge sufficient to both support the turbine 14 and resist the loading applied to the system 10 during use. In addition the base 12 may be of any other suitable shape and arrangement, and may for example employ more than three of the legs 18 and feet 22.

In use, when the base 12 is of triangular form as with the embodiment illustrated, it is preferable to position the system 10 on the seabed or other underwater support surface, such that an axis of rotation of the turbine 14 is substantially aligned with the prevailing tidal flow. In the embodiment illustrated the turbine 14 is mounted such that the axis of rotation is substantially in line with a longitudinal axis AA of the base 12, and thus in use the longitudinal axis AA is substantially aligned with the direction of the prevailing tidal flow.

In order to maximise the power derived from the turbine 14 during use, it is necessary that the front and rear open faces of the turbine 14 are positioned normally to the direction of tidal flow. This does however present a large surface area against which the tidal flow of water will act, applying significant horizontal loading to the system 10. As the pointed feet 22 are operable to prevent the system 10 from sliding laterally along the seabed, the above-mentioned horizontal loading applied by the tidal flow of water against the turbine 14, and to a lesser extent against the base 12, can result in an overturning moment being experienced by the system 10. While this overturning moment is accounted for in the design of the system 10, whose weight when on the seabed renders the normal overturning moment insignificant, during exceptional tidal conditions this overturning moment may overcome the weight of the system 10. In such circumstances the overturning moment will tend to raise the foot or feet 22 at the upstream end of the system 10 relative to the direction of tidal flow, and may ultimately result in overturning of the system 10.

In order to counteract such an extreme overturning moment, the system 10 is preferably provided with at least one, and more preferably a plurality of load-bearing members in the form of outriggers 26 secured to and extending outwardly from the base 12 as hereinafter described. Each outrigger 26 preferably comprises a leg 28 which terminates, at a free end thereof, with a face 30 which increases the surface area which will come into contact with the seabed should an overturning event occur. The outriggers 26 may extend from any suitable position about the base 12, for example one or more of the cross members 20 and/or one or more of the legs 18.

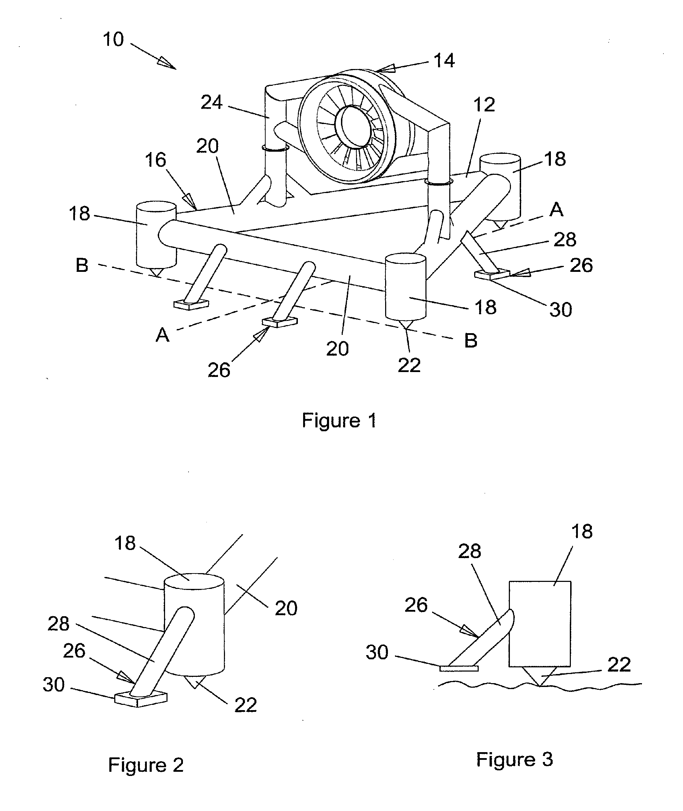

The outriggers 26 are oriented and dimensioned such that when the base 12 is in a normal operating orientation on the seabed, and thus in a substantially horizontal orientation, the face 30 of each outrigger 26 is elevated off the seabed, as illustrated in Figure 3. This ensures that during installation and/or recovery of the system 10 the outriggers 26 do not contact the seabed, which may complicate the installation/recovery, and may also result in damage to the outrigger 26. However, once the base 12 begins overturning, for example due to rotation of the base 12 about an overturning axis BB defined by a downstream pair of the legs 18 and associated feet 22, this will result in the face 30 of each outrigger 26 contacting the seabed, thus preventing further overturning of the system 10.

It will be appreciated that the size, shape and dimensions of the outriggers 26 may be varied in order to provide greater or lesser resistance to overturning of the system 10. In addition, the number and location of the outriggers 26 may be varied as required once the face 30 is positioned outboard of the legs 18/frame 16, or in other words downstream of the overturning axis BB with respect to the direction of tidal flow. For example, as illustrated in Figure 2, one or more outriggers 26 may extend from one or more of the legs 18 of the base 12. The horizontal distance at which the face 30 of each outrigger 26 is located, relative to a respective overturning axis of the base 12, will also have a bearing on the ability of the outriggers 26 to resist overturning of the system 10. It is also envisaged that, due for example to a difference in surface area of the system 10 being acting on by the tide in one direction of flow than the other, the overturning moment may be greater for one direction of tidal flow. It may therefore be necessary to position and dimension the outriggers 26 accordingly.

Furthermore, the angle at which the face 30 of each outrigger is disposed may be selected such that when the face 30 contacts the seabed during an overturning event, the face 30 is substantially parallel to the seabed or other support surface. In this way essentially the entire surface area of the face 30 will contact the seabed in order to maximise resistance to the overturning moment.

It will therefore be appreciated that providing one or more outriggers 26 the overall design of the system 10, in particular the base 12, can be made lighter, and therefore less costly, and will therefore be easier to handle and manoeuvre both on shore during manufacture and transport, and when lowering to the seabed or recovering therefrom.

## Claims

1. A hydroelectric turbine system (10) comprising a base (12) comprising a frame (16), a plurality of legs (18) extending from the frame; and at least one load bearing member (26) extending from the base (12) at a position adapted to resist, in use, overturning of the base (12).

2. A system according to claim 1 in which the base defines an overturning axis extending between a pair of the legs, the at least one load bearing member being positioned to resist an overturning moment acting about the overturning axis.

3. A system according to claim 1 or 2 in which the load bearing member is arranged and dimensioned to be at an elevated position above a surface of a deployment site when the plurality of legs are engaged against and supported by the surface.

4. A system according to any preceding claim in which the load bearing member has a load bearing face positioned outboard of the overturning axis.

5. A system according to any preceding claim in which the load bearing member comprises a leg secured to the base, and a load bearing face located at a free end of the leg.

6. A system according to claim 5 in which the load bearing face is oriented such as to be substantially parallel to a seabed or other support surface on contacting the seabed or support surface during an overturning event.

7. A system according to any preceding claim in which the frame is substantially triangular and the base comprises three legs, one at or adjacent each apex of the triangular frame.

8. A system according to claim 7 comprising a load bearing member extending from each of three sides of the triangular frame.

9. A system according to claim 7 or 8 comprising a plurality of the load bearing members extending from one side of the triangular frame.

10. A system according to any preceding claim comprising a hydroelectric turbine mounted on the base.

11. A system according to claim 9 in which the turbine comprises an open centre turbine.

## Patentansprüche

1. Hydroelektrisches Turbinensystem (10), umfassend einen einen Rahmen (16) umfassenden Sockel (12), mehrere Beine (18), die sich von dem Rahmen erstrecken; und mindestens ein lasttragendes Element (26) das sich in einer Lage von dem Sockel (12) erstreckt, die dazu angepasst ist, im Gebrauch dem Umkippen des Sockels (12) zu widerstehen.

2. System nach Anspruch 1, wobei der Sockel eine sich zwischen einem Paar der Beine erstreckende Umkippachse definiert, wobei das mindestens eine lasttragende Element dazu positioniert ist, einem um die Umkippachse wirkenden Umkippmoment zu widerstehen.

3. System nach Anspruch 1 oder 2, wobei das lasttragende Element dazu angeordnet und bemessen ist, sich in einer erhöhten Lage über einer Fläche eines Einsatzorts zu befinden, wenn die mehreren Beine an der Fläche angreifen und davon gestützt werden.

4. System nach einem der vorangehenden Ansprüche, wobei das lasttragende Element eine lasttragende Oberfläche aufweist, die gegenüber der Umkippachse außenliegend positioniert ist.

5. System nach einem der vorangehenden Ansprüche, wobei das lasttragende Element ein an dem Sockel befestigtes Bein und eine sich an einem freien Ende des Beins befindende lasttragende Oberfläche umfasst.

6. System nach Anspruch 5, wobei die lasttragende Oberfläche derart orientiert ist, dass sie, im Wesentlichen parallel zu einem Meeresboden oder einer anderen Stützfläche ist, wenn sie während eines Umkippereignisses den Meeresboden oder die Stützfläche berührt.

7. System nach einem der vorangehenden Ansprüche, wobei der Rahmen im Wesentlichen dreieckig ist und der Sockel drei Beine umfasst, eines an oder benachbart jeder Spitze des dreieckigen Rahmens.

8. System nach Anspruch 7, umfassend ein lasttragendes Element, das sich von jeder der drei Seiten des dreieckigen Rahmens erstreckt.

9. System nach Anspruch 7 oder 8, umfassend mehrere der lasttragenden Elemente, die sich von einer Seite des dreieckigen Rahmens erstrecken.

10. System nach einem der vorangehenden Ansprüche, umfassend eine auf dem Sockel installierte hydroelektrische Turbine.

11. System nach Anspruch 9, wobei die Turbine eine ringförmige Turbine umfasst.

## Revendications

1. Système de turbine hydroélectrique (10) comprenant une base (12) comprenant un châssis (16), une pluralité de jambes (18) partant du châssis ; et au moins un élément porteur de charge (26) partant de la base (12) à une position adaptée pour résister, durant l'utilisation, à un renversement de la base (12).

2. Système selon la revendication 1, dans lequel la base définit un axe de renversement s'étendant entre une paire des jambes, l'au moins un élément porteur de charge étant positionné pour résister à un moment de renversement agissant autour de l'axe de renversement.

3. Système selon la revendication 1 ou 2, dans lequel l'élément porteur de charge est agencé et dimensionné pour se trouver à une position élevée au-dessus d'une surface d'un site de déploiement quand la pluralité de jambes est engagée contre la surface et supportée par celle-ci.

4. Système selon l'une quelconque des revendications précédentes, dans lequel l'élément porteur de charge a une face porteuse de charge positionnée en dehors de l'axe de renversement.

5. Système selon l'une quelconque des revendications précédentes, dans lequel l'élément porteur de charge comprend une jambe fixée à la base, et une face porteuse de charge située à une extrémité libre de la jambe.

6. Système selon la revendication 5, dans lequel la face porteuse de charge est orientée de manière à être sensiblement parallèle à un fond de mer ou à une autre surface de support au contact avec le fond de mer ou la surface de support durant un événement de renversement.

7. Système selon l'une quelconque des revendications précédentes, dans lequel le châssis est sensiblement triangulaire et la base comprend trois jambes, une située à chaque sommet, ou adjacente à chaque sommet, du châssis triangulaire.

8. Système selon la revendication 7, comprenant un élément porteur de charge partant depuis chacun des trois côtés du châssis triangulaire.

9. Système selon la revendication 7 ou 8, comprenant une pluralité des éléments porteurs de charge partant d'un côté du châssis triangulaire.

10. Système selon l'une quelconque des revendications précédentes comprenant une turbine hydroélectrique montée sur la base.

11. Système selon la revendication 9, dans lequel la turbine comprend une turbine à centre ouvert.
